(19) **Europäisches Patentamt**

**European Patent Office**

**Office européen des brevets**

(11) Veröffentlichungsnummer: **0 284 161 B1**

# (12) EUROPÄISCHE PATENTSCHRIFT

(45) Veröffentlichungstag der Patentschrift: **15.06.94**

(21) Anmeldenummer: **88200539.0**

(22) Anmeldetag: **23.03.88**

(51) Int. Cl.⁵: **H04N 7/13**, H04N 7/137

(54) **Ouellcodierer für Videobilder.**

(30) Priorität: **27.03.87 DE 3710119**

(43) Veröffentlichungstag der Anmeldung:
**28.09.88 Patentblatt 88/39**

(45) Bekanntmachung des Hinweises auf die
Patenterteilung:
**15.06.94 Patentblatt 94/24**

(84) Benannte Vertragsstaaten:
**DE FR GB**

(56) Entgegenhaltungen:
**EP-A- 0 201 679**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Vogel, Peter
Wöhrletstrasse 7 a
D-8566 Diepersdorf(DE)**

(74) Vertreter: **Peuckert, Hermann, Dipl.-Ing. et al
Philips Patentverwaltung GmbH,
Wendenstrasse 35c
D-20097 Hamburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Quellcodierer für Videobilder mit einer Vorverarbeitungseinheit, die alle T Sekunden blockweise die Daten eines Videobildes liefert, das über einen steuerbaren Schalter an eine Codiereinheit übertragen wird, und mit einer Kontrolleinheit, die den Füllstand eines der Codiereinheit nachgeschalteten Pufferspeichers überwacht und in Abhängigkeit vom Füllstand des Pufferspeichers einen in der Codiereinheit enthaltenen Quantisierer und den steuerbaren Schalter steuert.

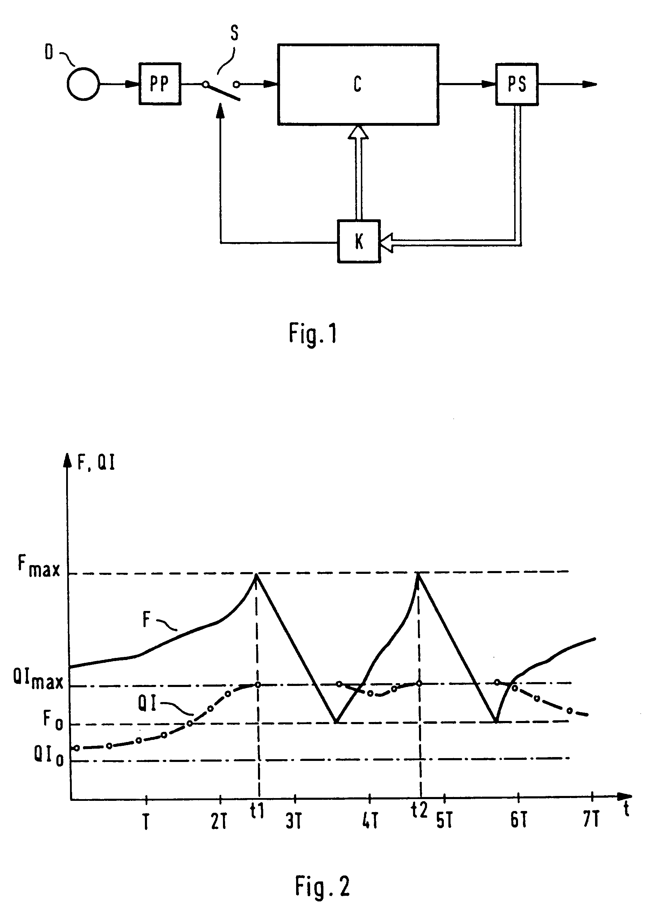

Ein Quellcodierer mit diesen Merkmalen ist in einem Artikel von G. Lutz et al. (Lutz, G., Speidel, J. und Streicher, E.: Der Videokonferenz-Codec 2Mbit/s - Ein System zur Übertragung von Bewegtbildern und Grafiken, Sprache und Daten mit 2Mbit/s. PKI Technische Mitteilungen (1985), H.1, S. 50 - 60) beschrieben. Die Fig. 1 zeigt ein Prinzipschaltbild des bekannten Quellcodierers. D bedeutet in der Figur eine Datenquelle, die Daten von Videobildern für eine Codiereinheit C liefert, in der die Umcodierung der Videodaten in einen bitsparenden Leitungscode vorgenommen wird. Der Codiereinheit C ist eine Vorverarbeitungseinheit PP vorgeschaltet. Die Vorverarbeitungseinheit PP strukturiert die Videodaten nach sogenannten Blöcken; das sind die Daten von Bildpunkten, die in quadratischen Bildausschnitten liegen. Die Codiereinheit C enthält u.a. einen Bildspeicher, in den alle T Sekunden sämtliche zu einem Videobild (unter Videobildern sind hier Halbbilder oder Vollbilder zu verstehen) gehörenden Blöcke über einen Schalter S übernommen und bis zu ihrer Verarbeitung zwischengespeichert werden, außerdem enthält sie auch einen steuerbaren Quantisierer, mit dem durch grobe oder feine Quantisierung die Zahl der Bits gesteuert wird, durch die die Information der Blöcke mit größerem oder kleinerem Informationsverlust codiert wird. Diese codierte Information wird mit zeitlich schwankender Bitrate in einen Pufferspeicher PS eingeschrieben, aus ihm mit konstanter Bitrate ausgelesen und an einen Empfänger übertragen.

Der Füllstand F des Pufferspeichers PS wird ständig von einer Kontrolleinheit K überwacht. In Abhängigkeit vom Füllstand F wird die Codiereinheit C, der Quantisierer und der Schalter S so gesteuert, daß der Pufferspeicher PS weder Überlaufen noch völlig entleert werden kann. Steigt z.B. der Füllstand F des Pufferspeichers PS, so sorgt die Kontrolleinheit K dafür, daß die Quantisierungsintervalle laufend vergrößert werden, die Quantisierung also gröber wird. Sinkt der Füllstand, wird die Quantisierung verfeinert. Steigt trotz gröbster Quantisierung der Füllstand F über einen maximalen Wert $F_{max}$ an, wird der Schalter S mindestens für ein ganzes Vielfaches von T Sekunden geöffnet, d.h., es wird mindestens ein Videobild aus der senderseitigen Videobildfolge weggelassen (Vollbild- oder Halbbildunterabtastung). Dieser Umstand wird durch eine entsprechende Information an den Empfänger übertragen, auf dessen Bildschirm dann anstelle der fehlenden Videobilder das zuletzt empfangene Videobild wiederholt wird.

Mit dem Erreichen des Füllstands $F_{max}$ wird die gesamte Codiereinheit C T Sekunden lang angehalten; der Füllstand F des Pufferspeichers PS sinkt dann, da er weiterhin mit konstanter Bitrate entleert wird, bis zu einer unteren Marke $F_O$. Nun arbeitet die Codiereinheit C weiter, und zwar - weil der Füllstand wieder ansteigt - mit ständig größer werdenden Quantisierungsintervallen, also ständig gröber werdender Quantisierung, bis entweder wieder der Füllstand $F_{max}$ erreicht ist oder alle im Bildspeicher der Codiereinheit C gespeicherten Blöcke abgearbeitet sind. Ist der Füllstand $F_{max}$ abermals erreicht, wird die Codiereinheit C wieder für T Sekunden angehalten. Sind die gespeicherten Blöcke abgearbeitet, wird der Schalter S geschlossen, wenn das nächste ganze Vielfache von T Sekunden seit seiner Öffnung abgelaufen ist.

Die Qualität der auf dem empfängerseitigen Bildschirm wiedergegebenen Videobilder ist bei dem bekannten Codierer aus folgendem Grund verbesserungsbedürftig:
Bei der Codierung eines im Bildspeicher der Codiereinheit C gespeicherten Videobildes werden unter Umständen sogar mehrmals sämtliche Werte für die Quantisierungsintervalle zyklisch durchlaufen. Innerhalb eines Videobildes treten also Schwankungen zwischen bester und schlechtester Qualität einzelner Bildausschnitte auf. Dieser Umstand führt bei der Bildwiedergabe auf der Empfängerseite kurzzeitig zu einem unzumutbaren Gesamteindruck für den Betrachter.

Der Erfindung liegt deshalb die Aufgabe zugrunde, einen Codierer der eingangs genannten Art anzugeben, mit dem eine bessere Bildqualität auf der Empfängerseite zu erreichen ist als mit dem bekannten Codierer.

Diese Aufgabe wird dadurch gelöst, da die Kontrolleinheit derart ausgesteltet ist, daß sie den Quantisierer zusätzlich in Abhängigkeit von der Zeit nach einem Erreichen des maximalen Füllstandes des Pufferspeichers und/oder in Abhängigkeit von der aktuellen Größe der Quantisierungsintervalle so steuert, daß während des gesamten Betriebes die Länge der Quantisierungsintervalle nur benachbarte Werte durchläuft.

Vorteilhafte Ausgestaltungen der Erfindung sind in den Unteransprüchen angegeben.

Anhand der Figuren und eines Ausführungsbeispieles soll die Erfindung näher erläutert werden.

Fig. 1 zeigt ein Prinzipschaltbild eines Quellcodierers der eingangs genannten Art und Fig. 2 zeigt ein Zeitdiagramm für den Füllstand eines Pufferspeichers und die Länge der Quantisierungsintervalle eines Quantisierers.

Fig. 1 ist in der Beschreibungseinleitung ausführlich erläutert worden. Ergänzend sei an dieser Stelle gesagt, daß die Fig. 1 die gesamte Taktversorgung auch nicht andeutungsweise enthält, da sie nicht Gegenstand vorliegender Erfindung ist. Wegen des detaillierten Aufbaus von Quellcodierern sei der Fachmann z.B. auf den eingangs erwähnten Artikel und die dort angegebenen Literaturzitate verwiesen.

Fig. 2 zeigt einen möglichen Zeitverlauf des Füllstandes F eines Pufferspeichers sowie der Länge QI der Quantisierungsintervalle eines Quantisierers nach Fig. 1 in willkürlichen Einheiten. Auf der Zeitachse sind Zeitpunkte im Abstand von T Sekunden aufgetragen. Zu jedem dieser Zeitpunkte übergibt im Normalbetrieb die Vorverarbeitungseinheit PP nach Fig. 1 - der Schalter S ist also im Normalbetrieb geschlossen - die Daten eines Vollbildes an den Bildspeicher der Codiereinheit C. 1/T ist folglich die in Hertz angegebene Bildfolgefrequenz; sie beträgt im vorliegenden Beispiel bei Bildern mit 288 Zeilen und 360 Bildpunkten pro Zeile 10 Hz.

Wie das Diagramm nach Fig. 2 ebenfalls erkennen läßt, erreicht der Füllstand F (durchgezogene Kurve) des Pufferspeichers PS zweimal seinen maximalen Wert $F_{max}$, nämlich zu Zeitpunkten $t_1$ und $t_2$. Zu diesen Zeitpunkten wird die gesamte Tätigkeit des Codierers C nach Fig. 1 T Sekunden (100ms) lang eingestellt (Verarbeitungspause); insbesondere werden dann keine Daten an den Pufferspeicher PS von Fig. 1 abgegeben, so daß sich dieser im vorliegenden Beispiel mit einer Bitrate von 64 kBit/s entleert. Nach 100ms enthält der Pufferspeicher PS folglich 6400 Bit weniger; dann wird der Codierer C wieder in Betrieb genommen und der Füllstand F steigt vom Wert $F_0$ abermals auf den Wert $F_{max}$. Auch jetzt wird der Codierer C angehalten und der Pufferspeicher PS 100ms lang nur entleert. Ist schließlich das im Bildspeicher unter der Codiereinheit C gespeicherte Bild auf diese Weise verarbeitet, wird der Schalter S, der zum Zeitpunkt t1 geöffnet wurde, wieder geschlossen und ein neues Bild in den Bildspeicher übernommen. Die Bilder, die von der Vorverarbeitungseinheit PP zu den Zeitpunkten 3T, 4T, 5T und 6T bereitgestellt worden sind, wurden wegen des geöffneten Schalters S nicht übertragen.

Auch bei geöffnetem Schalter S wird während der Verarbeitung des im Bildspeicher des Codierers C gespeicherten Bildes von der Kontrolleinheit die Länge QI der Quantisierungsintervalle des Quantisierers geändert, falls der Füllstand des Pufferspeichers sich ändert. Bei hohem Füllstand wird die Quantisierung gröber, die Quantisierungsintervalle werden also größer. Bei maximalem Füllstand $F_{max}$ ist die Länge QI am größten, nämlich $QI_{max}$. Während beim Stand der Technik die Länge QI allein vom Füllstand des Pufferspeichers PS abhängt, nach einer Verarbeitungspause des Codierers C der Quantisierer also mit wesentlich feinerer Quantisierung arbeitet als vor der Pause, wird erfindungsgemäß die Länge QI noch derart von anderen Parametern abhängig gemacht, daß die Länge der Quantisierungsintervalle QI keine plötzlichen und großen Veränderungen erfährt. Gerade diese Veränderungen während der Codierung eines Bildes führen nämlich zur unzumutbaren Bildqualität.

Im vorliegenden Beispiel ist die Länge QI nur vom Füllstand F des Pufferspeichers und von der Zeit nach einem Erreichen des maximalen Füllstandes des Pufferspeichers PS abhängig.

Zur einfacheren Erläuterung wird eine Hilfvariable v durch folgende Definitionsgleichungen als Funktion der Zeit festgelegt:

$$v = \begin{cases} \dfrac{[t - (t_n + T)]}{c} & \text{für} \quad c \geq t - (t_n + T) \geq 0 \\[2mm] 1 & \text{für} \quad t - (t_n + T) > c \\[2mm] \text{undefiniert} & \text{sonst,} \end{cases}$$

wobei $t_n$ der Zeitpunkt ist, bei dem zum letzten Mal seit Verstreichen von T Sekunden der Füllstand F den Wert $F_{max}$ erreicht hat und c eine vorgebbare, positive Zeitkonstante symbolisiert. Typische Werte von c sind T/10 Sekunden, d.h., 10ms im vorliegenden Beispiel.

Wird nun die Länge der Quantisierungsintervalle in Abhängigkeit von der Hilfsgröße und dem Füllstand F so gesteuert, daß

$QI(v,F) = (1 - v) \, g(F_{max}) + v \, g(F),$     (1)

wobei g(F) eine "stetige" und monoton wachsende Funktion von F ist, dann kann die Länge QI der Quantisierungsintervalle keine "Sprünge" machen; sie ist eine "stetige" Funktion der beiden Variablen v bzw. t und F. Die Anführungsstriche sind notwendig, weil alle Größen digital mit endlicher Stellenzahl dargestellt werden und deshalb die Begriffe "Stetigkeit" und "Sprung" in ihrer ursprünglichen Bedeutung nicht mehr verwendbar sind. Ein möglicher Verlauf von QI(v,F) ist in Fig. 2 mit eingetragen (strichpunktierte Kurve), dabei ist $QI_{max} = g(F_{max})$ und $QI_O = g(F_O)$. Der Verlauf zeigt die "Stetigkeit" von QI.

Angemerkt werden sollte noch, daß während der Verarbeitungspausen des Codierers C die Länge QI nicht definiert zu sein braucht, da sie nicht benötigt wird. Wichtig ist allein, daß während des Betriebes des Codierers C die Länge QI keine "Sprünge" macht, sondern nur benachbarte Werte durchläuft, unabhängig davon, ob der Betrieb durch eine Pause unterbrochen wird oder nicht.

**Patentansprüche**

1. Quellcodierer für Videobilder mit einer Vorverarbeitungseinheit, die alle T Sekunden blockweise die Daten eines Videobildes liefert, das über einen steuerbaren Schalter an eine Codiereinheit übertragen wird, und mit einer Kontrolleinheit, die den Füllstand eines der Codiereinheit nachgeschalteten Pufferspeichers überwacht und in Abhängigkeit vom Füllstand des Pufferspeichers einen in der Codiereinheit enthaltenen Quantisierer und den steuerbaren Schalter steuert,
   dadurch gekennzeichnet,
   daß die Kontrolleinheit (K) derart ausgestellt ist, daß sie den Quantisierer zusätzlich in Abhängigkeit von der Zeit nach einem Erreichen des maximalen Füllstandes des Pufferspeichers (PS) und/oder in Abhängigkeit von der aktuellen Größe der Quantisierungsintervalle so steuert, daß während des gesamten Betriebes die Länge der Quantisierungsintervalle nur benachbarte Werte durchläuft.

2. Quellcodierer nach Anspruch 1,
   dadurch gekennzeichnet,
   daß die Kontrolleinheit (K) den Quantisierer so steuert, daß die Länge QI der Quantisierungsintervalle sich nach der Formel

   $$QI = (1-v)\, g(F_{max}) + v\, g(F)$$

   ändert, wobei g(F) eine monoton wachsende Funktion des Füllstandes F des Pufferspeichers (PS), $F_{max}$ den maximalen Füllstand des Pufferspeichers (PS) und v eine Hilfsvariable bedeuten, und die Hilfsvariable v null ist, wenn die Codiereinheit nach Erreichen des maximalen Füllstandes $F_{max}$ ihren Betrieb wieder aufnimmt, und dann als Funktion der Zeit auf den Wert eins anwächst.

3. Quellcodierer nach Anspruch 2,
   dadurch gekennzeichnet,
   daß die Hilfsvariable v linear mit der Zeit auf den Wert eins anwächst und ihre Änderungsgeschwindigkeit etwa zehn mal so groß ist wie die Folgefrequenz der Videobilder.

**Claims**

1. A source encoder for video pictures comprising a preprocessing unit supplying the data of a video picture in blocks every T second, which video picture is applied to a encoding unit via a controllable switch, and a control unit which supervises the filling level of a buffer store connected in cascade to the encoding unit and controlling, in dependence upon the filling level of the buffer store, a quantizer included in the encoding unit and the controllable switch, characterized in that the control unit (K) is implemented in such a way that it additionally controls the quantizer in dependence upon the period of time after the maximum filling level of the buffer store (PS) has been reached and/or in dependence upon the actual value of the quantization stepsize, such that during the entire operation the value of the quantization stepsize only passes through adjacent values.

2. A source encoder as claimed in Claim 1, characterized in that the control unit (K) controls the quantizer in such a way that the value QI of the quantization stepsize changes in accordance with the formula

   $$QI = (1-v)\, g(F_{max}) + v\, g(F)$$

wherein g(F) denotes a monotonously increasing function of the filling level F of the buffer store (PS), $F_{max}$ denotes the maximum filling level of the buffer store (PS) and v denotes an auxiliary variable, and the auxiliary variable v is zero when, after having reached the maximum filling level $F_{max}$, the encoding unit resumes its operation, and then increases to the value of one as a function of time.

3. A source encoder as claimed in Claim 2, characterized in that the auxiliary variable V increases linearly with time to the value of one and its rate of change is approximately ten times higher than the picture frequency of the video pictures.

**Revendications**

1. Codeur de source pour images vidéo comportant une unité de prétraitement, qui délivre toutes les T secondes, par blocs, les données d'une image vidéo, qui est transmise à une unité de codage via un commutateur pouvant être commandé, et une unité de contrôle, qui contrôle le taux de remplissage d'une mémoire tampon installée en aval de l'unité de codage et commande, en fonction du taux de remplissage de la mémoire tampon, un quantificateur contenu dans l'unité de codage et le commutateur pouvant être commandé, caractérisé en ce que l'unité de contrôle (K) est agencée, de telle sorte qu'elle commande, en outre, le quantificateur en fonction du temps qui s'écoule après que le taux de remplissage maximum de la mémoire tampon (PS) a été atteint et/ou en fonction de la grandeur courante des intervalles de quantification de manière que pendant la totalité du fonctionnement, la longueur des intervalles de quantification ne passe que par des valeurs voisines.

2. Codeur de source selon la revendication 1, caractérisé en ce que l'unité de contrôle (K) commande le quantificateur, de telle sorte que la longueur QI des intervalles de quantification varie selon la formule :

$$QI = (1 - v)\, g(F_{max}) + v\, g(F),$$

où g(F) est une fonction à croissance monotone du taux de remplissage F de la mémoire tampon (PS), $F_{max}$ désigne le taux de remplissage maximum de la mémoire tampon (PS) et v désigne une variable auxiliaire, et la variable auxiliaire v est nulle lorsque l'unité de codage, après avoir atteint le taux de remplissage maximum $F_{max}$, reprend son fonctionnement, et augmente alors jusqu'à la valeur 1 en fonction du temps.

3. Codeur de source selon la revendication 2, caractérisé en ce que la variable auxiliaire v croît jusqu'à la valeur 1 linéairement en fonction du temps et sa vitesse de variation est d'environ dix fois la fréquence de répétition des images vidéo.

EP 0 284 161 B1

Fig. 1

Fig. 2